# EUROPEAN PATENT APPLICATION

(11) **EP 1 168 222 A1**
(43) Date of publication of application: **02.01.2002**
(21) Application number: 01305521.5
(22) Date of filing: 26.06.2001
(51) Int. Cl.: G06F 17/60

(54) **Information system for managing product guarantee information**

(30) Priority: 28.06.2000 JP 2000194233; 04.06.2001 JP 2001168627
(71) Applicant: Sony Computer Entertainment Inc., Tokyo 107-0052 (JP)
(72) Inventor: Hino, Mariko, c/o Sony Computer Entertainment Inc., Minato-ku, Tokyo 107-0052 (JP); Komata, Nobuhiro,c/o Sony Comp. Entertainment Inc., Minato-ku, Tokyo 107-0052 (JP)
(74) Representative: Hedley, Nicholas James Matthew

(57) **Abstract**

The purpose of this invention is to establish a guarantee system for customer products. The information processing system of this invention has a timer 3 for obtaining at least date information, a database 7 for registering information on customers who purchase products 17, IDs 18 of these products 17, and date information from timer 3, code reader 12 for reading IDs 18, and a computer that has control software that runs on a CPU, and said control software has a comparison function unit 4 that decides, based on the date a customer purchased a product 17 and the guarantee period for product 17, whether the customer's product 17 is within the guarantee period.

## Description

### FIELD OF THE INVENTION

This invention concerns an information processing system, information processing method, recording medium, and program that can, when a customer product is to be repaired, automatically confirm the guarantee deadline or the term of guarantee (is refereed to as "the guarantee deadline", hereinafter.) concerning free repair of said product and can confirm the date and time when the product may be picked up after it is repaired.

### BACKGROUND OF THE INVENTION

Heretofore it has been general that if a customer purchases a product, the manufacturer or maker of the product will repair the product for free, with certain exceptions, only for a fixed period from when the product is purchased. This guarantee is usually certified by a written guarantee. The written guarantee states the name of the store of purchase, the date of purchase, and other such information.

The decision whether the date a customer brings in a product for repair (the repair receipt date) is within the guarantee period is made by computing the final date of the guarantee period from the date of purchase appearing on the written guarantee and the guarantee period prescribed by the manufacturer, and determining whether said repair receipt date is before or after said final date.

Also, notification to the customer of completion of the repair is made by telephone from the store, the manufacturer, or the repair contractor. From this notification, the customer can know when to pick up the repaired product.

By the way, customers often lose their written guarantee, and sometimes because of this, trouble, such as concerning the standard for deciding whether the repair is free or for a fee, occurs between the customer and the store or between the customer and the manufacturer. Similar trouble also occurs if the date of purchase has been obliterated or not filled in.

Also, because notification that the repair has been completed is generally made by telephone, often the notification of completion of repair is not immediately transmitted to the customer.

### SUMMARY OF THE INVENTION

The purpose of this invention, which was devised in order to solve such problems and concerns product repairs requested by the customer, is to provide an information processing system, information processing method, recording medium, and program that will make it possible to prevent the occurrence of trouble, etc. concerning the criteria for free or for-a-fee repair, to speedily convey to the customer the completion of repair of the product, and to treat the customer in a user-friendly way.

The information processing system of this invention has a timer for obtaining at least date information, a database in which are registered at least information about customers who purchased products, information about said products, and date information from said timer, a reading device that reads said product information, and a computer that has control software or management software (is referred to as "control software", hereinafter.) that runs on a CPU, and said control software has at least the function of deciding whether a customer's product is within said guarantee period based on the date when the customer purchased the product and the guarantee period for free repair of the product.

Thus if, for example, there is a request from a customer concerning repair of a product, by execution of the computer control software, whether said customer's product is within said guarantee period is decided based on the date when said customer purchased said product (the product whose repair was requested) and the guarantee period for free repair of said product. Based on the results of this decision, one can objectively recognize, for example, whether it is a free repair or a for-a-fee repair.

That is, in this invention one can prevent the occurrence of trouble concerning repair of products requested by customers and concerning the criteria for whether the repair shall be free or for a fee. Therefore the customer need not preserve the written guarantee concerning free repair, and guarantee management at the manufacturer can be done more accurately.

And in the above control software, if information about the product from said reading device is registered in said database, it suffices if it has the function of collating the date on which said product was purchased with the date information from said timer. In this way, one can have service differentiation with persons who are not considered customer-registered persons, and can quickly and accurately decide whether the product of a customer (registered customer) is within said guarantee period.

It suffices if said computer has a communication means, and when the customer's product is received for repair, at least information on said product is sent to the repair contractor via said communication means. In this case, it suffices to send date information at the time of repair receipt.

In this way, the repair contractor can receive information about the product by the time the actual product arrives, so the general content of the repair can be ascertained from the product history or repair history accumulated at the repair contractor, thereby allowing the repair to be speeded up.

And it suffices if said computer, via said communication means, receives information on the date of arrival of the repaired product from the repair contractor, or information on the date of sending of the repaired product. The date of arrival and date of sending are both set by the repair contractor.

Here, assuming a case in which said computer is installed at a retail store, the date of arrival means one that shows the day on which the repaired product arrives at said store, and is of a nature that can be declared if the number of days it takes for delivery is predetermined.

On the other hand, the date of sending, assuming the above-described example, means the day on which the repaired product is sent to said retail store, and is of a nature that can be declared if, for example, the number of days it takes for delivery is not predetermined.

And by the above invention, information on the date of arrival or information about the date of sending is received by the retail store before the repaired product actually reaches the retail store, so one can promptly respond to inquiries from customers, and conversely one can inform the customer of the date of arrival or date of sending of the repaired product, thereby improving service to the customer.

Also, it suffices if this invention includes the customer's e-mail address in said customer information, and a message is sent to the customer's address giving information about said date of arrival or date of sending. In this way, it suffices if the customer waits for a message on repair completion (a newly incoming message), so there is no need to keep asking the retail store about the state of repair of the products. This makes it possible to avoid the problem of having a flood of inquiries come in to a retail store and, for example, not being able to get through to a retailer's response center, etc. by a telephone inquiry.

It suffices if the above control software has the function of verifying the identification information input from the customer and -- if it is recognized by verifying said customer identification information that it is a customer who has the right of access -- the function of displaying on the customer's computer the state of repair of the product received for repair.

Here, as the state of repair, there are the date of arrival of the product received for repair (for example, the date it arrives at the retail store as having been repaired) or its date of sending (for example, the date it is sent to the retail store as having been repaired), or its being unrepaired, etc.

This makes it possible, first, to provide service differentiation with those who are not registered as customers and to popularize customer registration in this information processing system. Also, it makes it possible for a registered customer to simply make an inquiry about the state of repair, and thus makes it possible to deal with customers in a user-friendly way.

It suffices if said control software has a function whereby it receives repair fee information from the repair contractor or the amount of money to be paid to the repair contractor and notifies the bank of the said repair fee information or the amount of money to be paid to the repair contractor.

This makes it possible to quickly calculate the exact amount of the expenses for product repairs (the expenses incurred for the retail store and for the repair contractor).

Next, the information processing method of this invention uses a database in which are registered at least information about the customer who purchased the product, information about the product read through a reading device, and date information from the timer, and it decides whether the customer's product is within the guarantee period based on the date the customer bought the product and the guarantee period for free repair of the product.

In this way, the customer need not keep written guarantees concerning free repair, and guarantee management at the manufacturer can be done accurately. In addition, the customer can know when the repair has been completed without repeatedly making inquiries by telephone.

Next, the program registered in the recording medium of this invention and the program of this invention have a step that registers in a database information about the customer who purchased the product, information about the product read through a reading device, and date information from the timer, and a step in which it decides whether the customer's product is within said guarantee period based on the date when the customer purchased the product and the guarantee period for free repair of the product.

This makes it possible to easily build said information processing system if one reads said program from the recording medium or over a network and installs it on the necessary computers.

That is, the customer need not keep written guarantees concerning free repair, and guarantee management at the manufacturer can be done accurately. In addition, one can also enjoy the effect that the customer can know when the repair has been completed without repeatedly making inquiries by telephone.

### BRIEF EXPLANATION OF THE DRAWINGS

Figure 1 is a block diagram showing the rough composition of the information system of this embodiment.

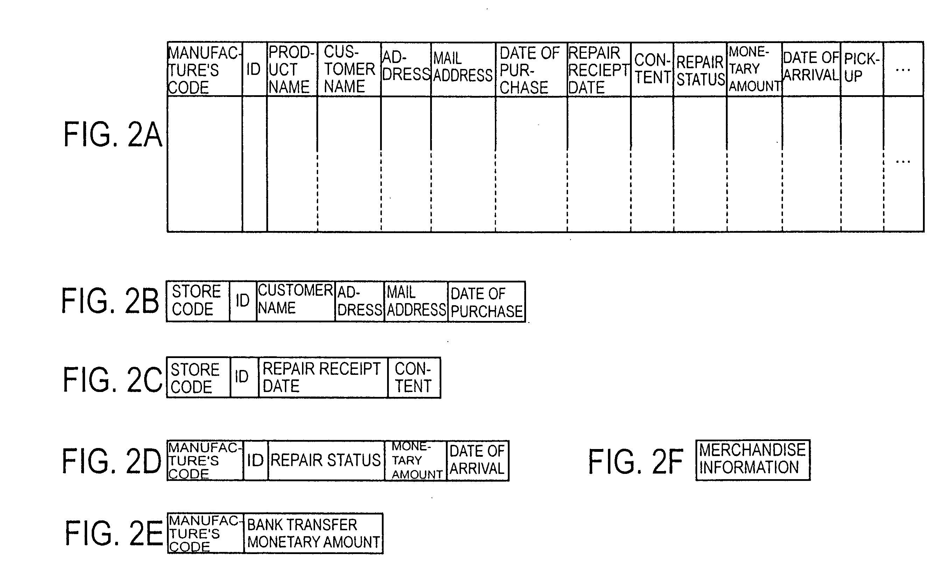

Figure 2 is an explanatory diagram showing the content of the information registered in the database; Figure 2B is an explanatory diagram showing the content of the information transmitted from the store's computer to the manufacturer's computer when the product is purchased; Figure 2C is an explanatory diagram showing the content of the information transmitted from the store's computer to the manufacturer's computer at the time of repair receipt; Figure 2D is an explanatory diagram showing the content of the information received by the store's computer when the repair has been completed; Figure 2E is an explanatory diagram showing the content of the information transmitted from the store's computer to the bank's computer; and Figure 2F is an explanatory diagram showing the content of the information concerning merchandise that is transmitted from the store's computer to the customer's computer.

Figure 3 is a flowchart showing the acquisition and processing of customer information when a customer purchases a product.

Figure 4 is a flowchart showing the processing when repair of a product is received from a customer.

Figure 5 is a flowchart showing the processing for notifying the customer of the state of repair.

Figure 6 is a flowchart showing the processing when a customer accesses repair information on the store's computer.

Figure 7 is a flowchart showing the processing after the repair fee is remitted from the customer.

### PREFERERRED EMBODIMENTS OF THE INVENTION

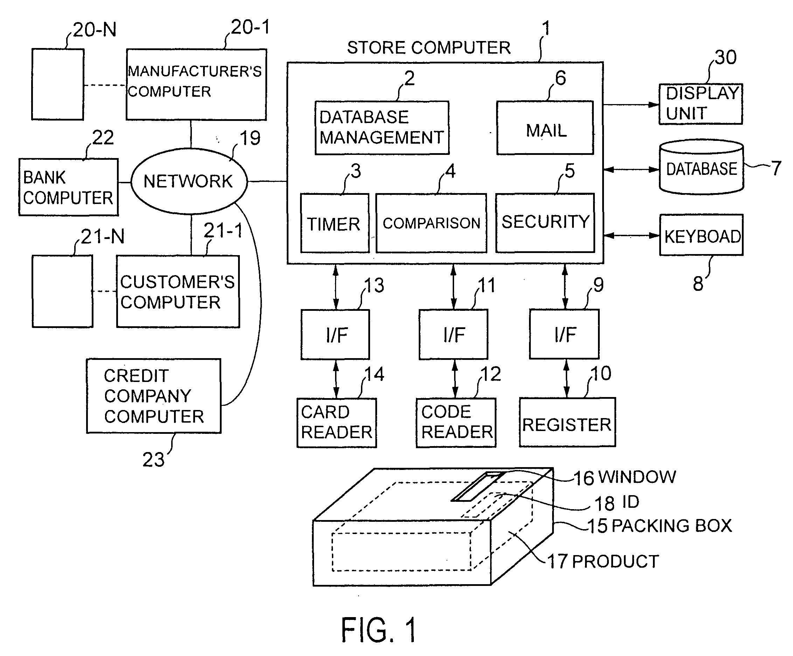

In the following, we describe, with reference to Figures 1-7, an embodiment applied to the information processing system, information processing method, and information system for managing the recording medium and program and product guarantee information.

Figure 1 is a block diagram that shows in sketch form the composition of information system 10 of this embodiment; in particular, it shows a state in which a store computer 1 installed in a given retail store is connected via a telephone circuit, optical fiber dedicated line, or other network 19 to manufacturer computers 20-1 to 20-N, customer computers 21-1 to 21-N, bank computer 22, and credit company computer 23.

As shown in Figure 1, connected to store computer 1 are database 7 for registering customer information, etc., keyboard 8 for inputting various data, cash register 10 for taking in cash, interface 9 that allows data to be exchanged between said cash register 10 and store computer 1, code reader 12 for reading through window 16 the ID 18 of product 17 packed in packing box 15, interface 11 that data-converts the signal output from said code reader 12 and inputs it into store computer 1, card reader 14 for reading customer credit card information, interface 13 that data-converts the signal output from said card reader 14 and inputs it into store computer 1 and display unit 30.

Here, code reader 12 reads engineeringly (a meaning including optically, electromagnetically, etc.) barcodes and computer-readable codes.

Control software is activated on store computer 1. As the main functions of this software (including software components) there are transmission and reception function unit 6, database management function unit 2, comparison function unit 4, and security function unit 5.

Transmission and reception function unit 6 performs transmission and reception of data (including messages) with respect to external computers (manufacturer computers 20-1 to 20-N, customer computers 21-1 to 21-N, bank computer 22, and credit company computer 23).

Database management function unit 2 handles access processing for registering information in database 7 and reading information from database 7.

Comparison function unit 4 decides whether the present point in time is within the guarantee period by calculating the guarantee final date from the customer's product purchase date and the manufacturer's guarantee period and comparing the present point in time (the present time) with this guarantee final date.

Security function unit 5 verifies whether the ID input by the customer matches the ID registered in database 7.

Here, for ID, different values or lettering, etc. are allocated to each product. Thus even if it is a product of the same kind, the same ID is never allocated as one.

Also, database 7 is stored in a large-capacity external memory such as a hard disk or DVD-RAM, and access is possible through each corresponding drive (hard disk drive, DVD-RAM drive, etc.).

And as shown in Figure 2A, the information registered in database 7 includes a "manufacturer's code" indicating the manufacturer (maker) of the product, a product "ID", a "product name", a "customer name", the customer's "address", the customer "e-mail address", the "date of purchase", the "repair receipt date", the "content" of the repair, "repair status" indicating whether it is free or for a fee, the "monetary amount" of the repair, the "date of arrival or date of sending" of the repaired product, and "pickup" indicating whether it has been picked up.

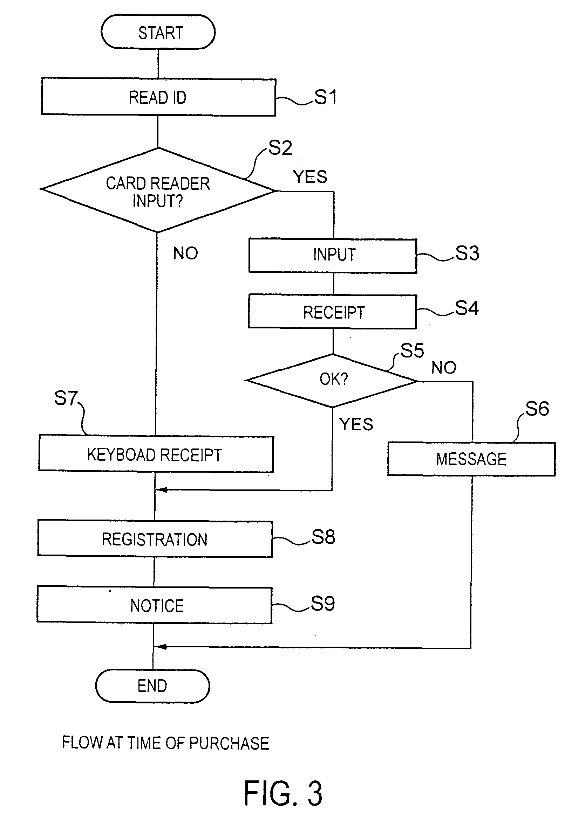

Next, we describe, with reference to Figures 3A-6E, the processing operations of the information system of this embodiment.

### 1. If a customer purchases a product

As shown in Figure 3, first, at the store, ID 18 of product 17 selected by the customer is read by code reader 12 through window 16 in packing box 15 (step S1). The read ID 18 is supplied via interface 9 to store computer 1. When this ID 18 is supplied to store computer 1, the price of product 17 that the customer wishes to purchase is determined from a correspondence table (not pictured) of product IDs and prices.

Next, store computer 1 decides whether there is input from card reader 14 (step S2), and if it decides that there is ("YES"), it reads the information of the customer's card (step S3). The customer's card information, together with price information on product 17 the customer wishes to purchase, is supplied via network (network) 19 to credit company computer 23 (step S4). Here, automatic examination takes place. The results of this examination are supplied via network 19 from credit company computer 23 to store computer 1. Based on said examination results information, store computer 1 decides whether settlement of the customer's card is permitted by the credit company (step S5), and if it is permitted ("YES"), executes registration processing (step S8). If it is not permitted ("NO"), a message such as "This card cannot be used" is displayed on display unit 30.

If other than input by card reader 14 (if "NO" in step S2), input by keyboard 8 is accepted (step S7).

Besides the case of input by card reader 14, in the case of input by keyboard 8 as well, the customer's name, address, and e-mail address are input either automatically or manually.

The manufacturer's code, ID 18 of product 17, product name, customer's name, address, and e-mail address, together with the date from timer 3, are registered in database 7 by database management function unit 2 (step S8).

And among the above information, as shown in Figure 2B, transmission information is prepared by adding the store code to the information on ID 18 of product 17, the customer's name, address, and e-mail address, and the date of purchase, and it is sent via network 19 to the corresponding manufacturer's computer 20-1 to 20-N. Figure 2B shows the data format of the transmission information.

### 2. If the customer has presented a product for repair

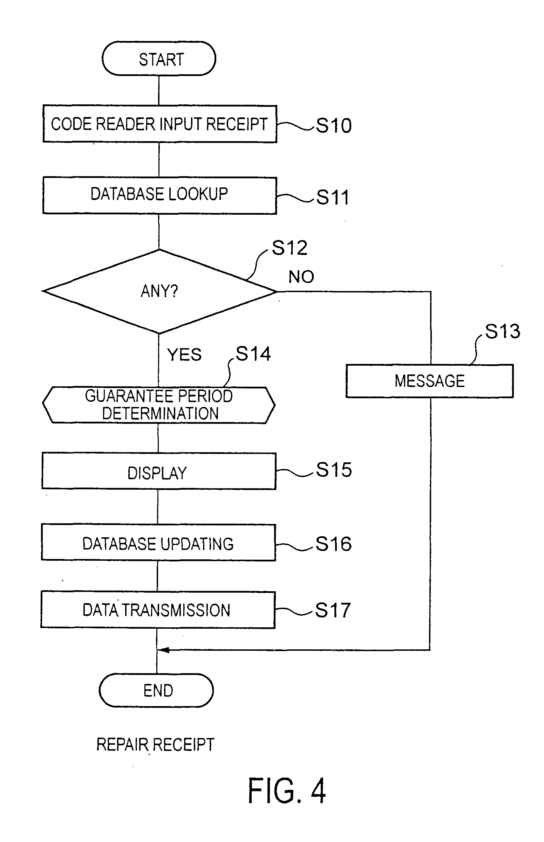

As shown in Figure 4, ID 18 of product 17 brought in to the store by the customer is read by code reader 12 and is supplied to store computer 1 (step S10). Database management function unit 2 of store computer 1 searches database 7 for the ID 18 supplied from code reader 12 via interface 11 (step S11).

Next, it is decided whether this ID 18 is registered in the database (step S12), and if it is not ("NO"), a message such as "This is a product of a manufacturer not carried at this store" is displayed on display unit 30 (step 13). This is the processing for not accepting the product of a manufacturer that is not handled.

If it is a product of a manufacturer that is carried ("YES"), a decision is made whether it is in the guarantee period (step S14). This decision is made by comparison function unit 4 calculating the final guarantee date from the date of purchase and the product's guarantee period that are registered corresponding to ID 18 read from database 7, and deciding whether the date from timer 3, that is, for example, the date when the customer brought the product in to the store and asked for repairs and it was accepted (the repair receipt date) is before or after the final guarantee date. Of course, only if said repair receipt date is before the final date is it considered within the guarantee period. The results of this decision are displayed on display unit 30. This is in order to report to the customer whether it is within the guarantee period.

Next, database management function unit 2 updates the information corresponding to ID 18 in database 7 (step S16). The information updated here is the "repair receipt date" and "content" among the information shown in Figure 2A. The "content" is input through store computer 1 and is output through manufacturer's computers 20-1 to 20-N.

And as shown in Figure 2C, transmission information is prepared by adding the "store code" to the "ID", "repair receipt date", and "content", and is supplied via network 19 to any of manufacturer's computers 20-1 to 20-N (step S17).

### 3. If repair communication is made to the customer

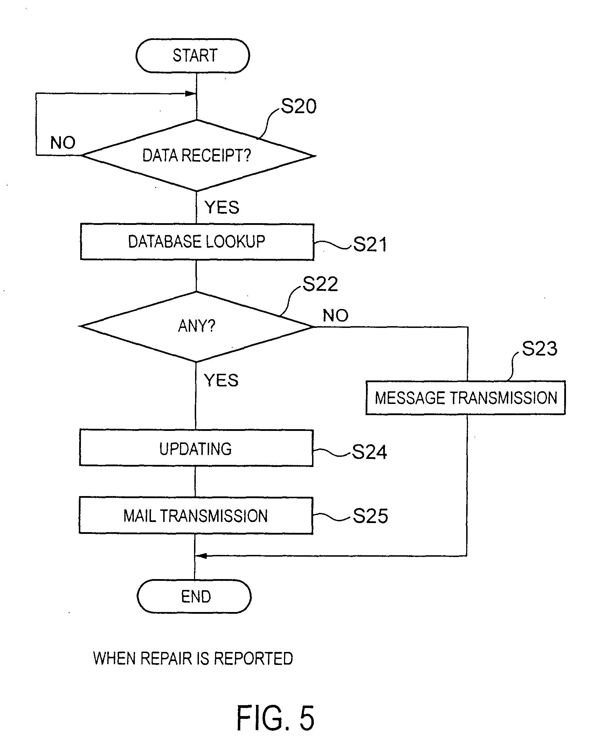

As shown in Figure 5, it is decided whether information subsequent to the repair request has been received from a manufacturer's computer 20-1 to 20-N (step S20), and if so ("YES"), database 7 is searched (step S21). Here, as shown in Figure 2D, the information to be received is "manufacturer's code", "ID", "repair status", "monetary amount", and "date of arrival" (or date of sending). Here, "repair status" is data showing whether the repair is free or for a fee. The decision whether the repair is free or for a fee is made according to whether the repair receipt date is within the guarantee period. This decision is the method already explained (see step S14 in Figure 4), and in this case it is done also by manufacturer's computers 20-1 to 20-N. The "monetary amount" is the repair fee, and this information is information that is input in manufacturer's computers 20-1 to 20-N together with the "date of arrival" when the product, after being repaired, arrives at the store. Also, it may be the "date of sending" as well. This "date of sending" means the day on which the manufacturer sends out the product after it has been repaired.

As a result of the search of database 7, it is decided whether information having the same "ID" as in the information sent from manufacturer's computer 20-1 to 20-N has been registered in database 7 of store computer 1 (step S22), and if not ("NO"), a message to this effect is supplied via network 19 to manufacturer's computers 20-1 to 20-N.

If an "ID" from manufacturer's computers 20-1 to 20-N is registered in database 7 ("YES"), the "repair status", "monetary amount", and "date of arrival" (or "date of sending"), which are received information, are registered in database 7 (step S24). Transmission and reception function unit 6 of store computer 1 generates a message including the "monetary amount" and "date of arrival" (or "date of sending"), sets the e-mail address of the customer that corresponds to the "ID" that has been received, and sends said message to the customer's e-mail server (not pictured).

Of course, store computer 1 may be used as the e-mail server.

In this way, with the customer's computer (any of 21-1 to 21-N) to which the e-mail from the store is sent, by activating the e-mail control software, said e-mail is received as newly incoming mail and is displayed on the display monitor that is connected to said customer's computer (any of 21-1 to 21-N). Therefore the customer during a pending repair request can learn of the state of repair via e-mail, without making inquiries to the store or manufacturer.

### 4. If a customer accesses the store computer in order to learn the date of arrival or price of a product submitted for repair

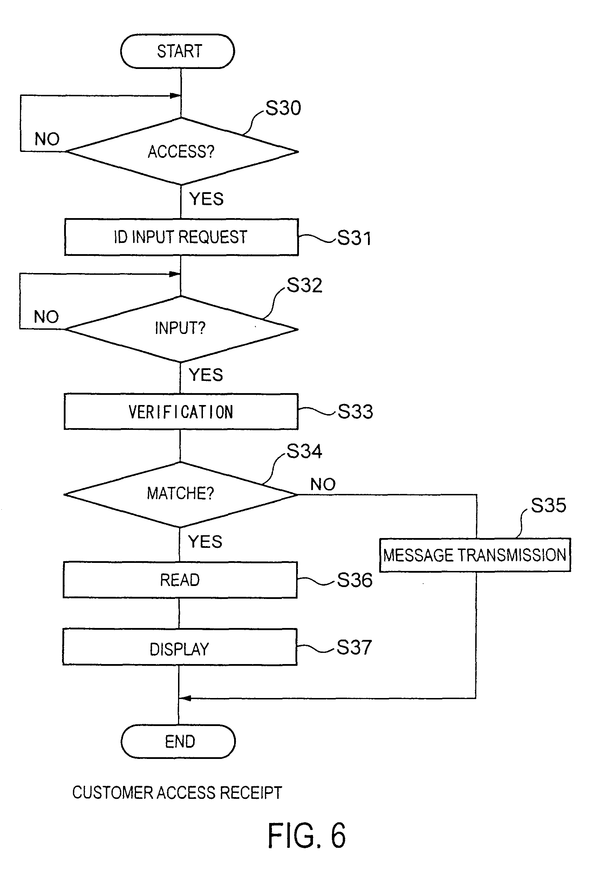

As shown in Figure 6, store computer 1 decides whether an access is being made (step S30), and if so, requests ID input (step S31). This request screen is displayed on a display monitor connected to a customer's computer (any of 21-1 to 21-N that is accessible) via network 19. When the customer inputs the ID via a customer's computer (any of 21-1 to 21-N that is accessible), the ID is supplied via network 19 to store computer 1.

It is decided in store computer 1 whether an ID has been input (step S32), and if it is decided that it has been input, database 7 is searched (step S33).

Also, it is decided whether the ID that has been transmitted is registered in database 7 (step S34), and if it is decided that it is not registered ("NO"), a message such as "cannot be accessed" is transmitted via network 19 to a customer's computer (any of 21-1 to 21-N that is accessible). If it is decided that it is registered, store computer 1 reads from database 7 the "repair status", "date of arrival" (or date of sending), and "monetary amount" that correspond to the ID sent from the customer.

This information is displayed on a display monitor connected to a customer's computer (any of 21-1 to 21-N that is accessible) via network 19. And if said information is not sent from the manufacturer, nothing is displayed in the display region where said information should be displayed. This is because the information is not registered in database 7.

In this case, because there is no information on "repair status", store computer 1 may send to a customer's computer (any of 21-1 to 21-N that is accessible) via network 19 a message such as "repair has not been completed".

### 5. Processing after payment of repair fee

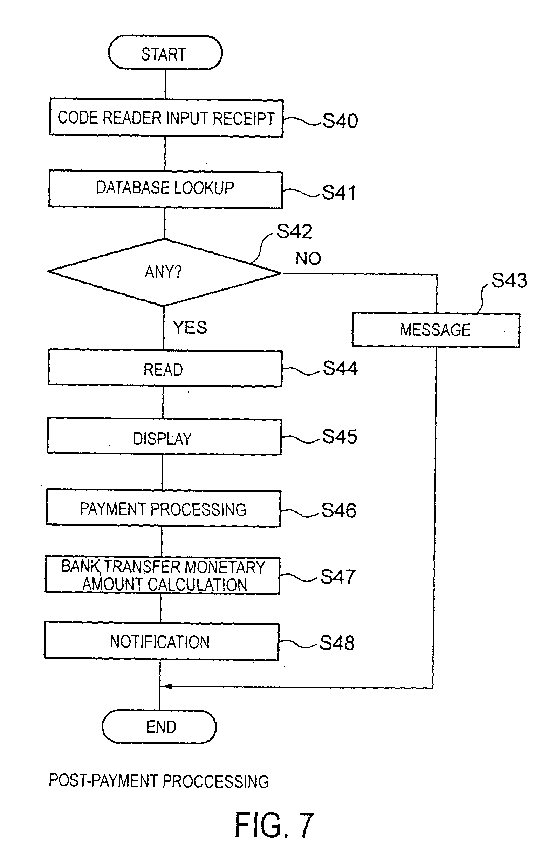

As shown in Figure 7, if the customer comes to the store for the purpose of picking up repaired product 17, first, for example the store manager or an employee brings out said customer's product from among the repaired products. After confirmation of the product by the customer, the ID of said product is read into store computer 1 using a code reader. Product ID 18 read by code reader 12 is supplied to store computer 1 via interface 11 (step S40).

Database management function unit 2 of store computer 1 searches from database 7 for ID 18 from code reader 12 (step S41), and if ID 18 is not found ("NO"), displays on display unit 30 a message such as "please use ordinary payment processing". In this case, the store manager or employee hand-calculates the monetary amount for the repair and the profit while viewing the repair slip from the manufacturer and issues the customer an invoice. The customer confirms the monetary amount on the invoice and pays by credit card or in cash.

If, on the other hand, ID 18 is found ("YES"), database management function unit 2 reads from database 7 the "monetary amount" registered in correspondence with ID 18. The read "monetary amount" is displayed on display unit 30. Next, payment processing is done (step S46). In this payment processing, in the case of a credit card, processing is done for card settlement as explained above, and in the case of cash, the exact calculation is done with cash register 10. These procedures and processing are not explained in detail here, because they are already in wide use.

When payment processing ends, store computer 1 calculates the monetary amount to be transferred to the manufacturer's bank account. Here, the reason for doing the calculation is because, apart from cases in which the monetary amount reported from the manufacturer is transferred to the manufacturer, there are cases in which a certain percentage is taken by the store.

Information on the monetary amount to be paid to the manufacturer that is thus calculated, including an appended "manufacturer's code" as shown in Figure 2E, is supplied via network 19 to the bank computer 22 as transmission information and simultaneously to a manufacturer's computer (any of 20-1 to 20-N that is accessible) (step S47). Upon receiving said information, bank computer 22 performs processing to transfer it to the account corresponding to the manufacturer's code (step S48).

A merchandise category is included in the ID, and when new product information of the same category as this merchandise category is sent from manufacturer's computer 20-1 to 20-N to store computer 1, as shown in Figure 2F, "merchandise information" may be automatically transmitted as an e-mail message to the customer corresponding to the ID that includes the same merchandise category information.

As explained above, in this embodiment, a guarantee period is set at the time a customer purchases merchandise, and thereafter every time the customer requests repair of merchandise, it is automatically decided whether it is within the guarantee period. Also, a repair completion report is sent to the customer or store via network 19 (network).

Therefore, the customer need not preserve written guarantees, and manufacturer guarantee management can be done more accurately. In addition, the customer is able to find out the completion of the repair without making repeated telephone inquiries.

As set forth above, with the information processing system, information processing method, recording medium, and program of this invention, the occurrence of trouble concerning the criteria for free repairs and for-a-fee repairs concerning product repairs requested by customers can be prevented, the completion of product repairs can be speedily conveyed to customers, and customers can be treated in a user-friendly way.

## Claims

1. An information processing system that has at least a timer for obtaining date information,
a database in which are registered at least information about customers who purchased products, information about said products, and date information from said timer,
a reading device that reads said product information, and
a computer that has control software that runs on a CPU, and
said control software has
at least the function of deciding whether a customer's product is within said guarantee period based on the date when the customer purchased the product and the guarantee period for free repair of the product.

2. An information processing system as described in claim 1 that is **characterized in that** said control software
has as function that, if product information from said reading device is registered in said database, compares the date information from said timer and the date on which said product was purchased.

3. An information processing system as described in claim 1 that is **characterized in that** said computer has a communication means and
when a customer product is received for repairs, transmits at least information about said product to the repair contractor via said communication means.

4. An information processing system as described in claim 3 that is **characterized in that** said computer also transmits via said communication means date information at the time of repair receipt.

5. An information processing system as described in claim 3 that is **characterized in that** said computer receives, via said communication means, information on the date of arrival of the repaired product from the repair contractor or information on the date of sending of the repaired product.

6. An information processing system as described in claim 5 that is **characterized in that** the customer's e-mail address is included in said customer information, and a message giving information on said date of arrival or information on the date of sending is transmitted to the customer's address.

7. An information processing system as described in claim 3 in which said control software has a function for verifying identification information input from customers and
a function for displaying on the customer's computer the state of repair of said product received for repairs.

8. An information processing system as described in claim 3 in which said control software has a function that receives repair price information from the repair contractor or the monetary amount to be paid to the repair contractor, and reports to the bank said repair price information or monetary amount to be paid to the repair contractor.

9. An information processing method that uses a database in which are registered at least information about customers who purchased products, information about products read via a reading device, and date information from a timer, and
based on the date when a customer purchased a product and the guarantee period for free repair of the product, decides whether a customer's product is within said guarantee period.

10. In a recording medium on which is recorded a computer-readable and -executable program,
a recording medium in which said program has
a step that registers in a database information about customers who purchased products, information about products read via a reading device, and date information from a timer, and
a step that decides, based on the date when a customer purchased a product and the guarantee period for free repair of the product, whether a customer's product is within said guarantee period.

11. Being a computer-readable and -executable program,
a program that has a step that registers in a database information about customers who purchased products, information about products read via a reading device, and date information from a timer, and
a step that decides, based on the date when a customer purchased a product and the guarantee period for free repair of the product, whether a customer's product is within said guarantee period.
